(19) **Europäisches Patentamt**
**European Patent Office**
**Office européen des brevets**

(11) **EP 2 251 826 A1**

(12) **EUROPÄISCHE PATENTANMELDUNG**

(43) Veröffentlichungstag:
**17.11.2010 Patentblatt 2010/46**

(51) Int Cl.:
***G06Q 30/00*** *(2006.01)*

(21) Anmeldenummer: **09006647.3**

(22) Anmeldetag: **16.05.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(71) Anmelder: **Deutsche Telekom AG**
**53113 Bonn (DE)**

(72) Erfinder: **Casott, Norbert, Dr.**
**50968 Köln (DE)**

(54) **Verfahren und Vorrichtung zum Erstellen einer Datenbank, die Informationen über Tankstellen in einem Bezugsgebiet aufweist sowie zur automatischen Auswahl einer Tankstelle**

(57) Die Erfindung betrifft ein Verfahren und eine Vorrichtung zum Erstellen einer Datenbank, die Informationen über Tankstellen in einem Bezugsgebiet aufweist, insbesondere Informationen, die zur Auswahl einer preiswertesten Tankstelle geeignet sind, um diese Tankstelle anfahren zu können. Die Erfindung betrifft weiterhin ein Verfahren und eine Vorrichtung zur automatischen Auswahl mindestens einer Tankstelle für Kraftfahrzeuge auf der Basis der Informationen in der erfindungsgemäßen Datenbank.

**EP 2 251 826 A1**

## Beschreibung

Die Erfindung betrifft ein Verfahren und eine Vorrichtung zum Erstellen einer Datenbank, die Informationen über Tankstellen in einem Bezugsgebiet aufweist, insbesondere Informationen, die zur Auswahl einer preiswertesten Tankstelle geeignet sind, um diese Tankstelle anfahren zu können. Die Erfindung betrifft weiterhin ein Verfahren und eine Vorrichtung zur automatischen Auswahl mindestens einer Tankstelle für Kraftfahrzeuge auf der Basis der Informationen in der erfindungsgemäßen Datenbank.

## Technischer Hintergrund

Tankstellen sind heutzutage wesentlicher Bestandteil digitaler Karten. Die darauf basierende Suche nach der nächsten Tankstelle in der Umgebung ist für Internetanwendungen und Navigationssysteme seit langem Standard. Zur Bestimmung der nächsten Tankstelle werden mitunter nicht nur die Luftlinienentfernungen herangezogen, einzelne Systeme verwenden auch die tatsächlich zu fahrende Strecke, um die Tankstellen der Umgebung in einer sortierten Liste aufzuführen.

Seit kurzem werden nun auch im Internet (z.B. www.clever-tanken.de) Preisinformationen für Tankstellen vorgehalten. Diese können als dynamischer Inhalt (Content) in Navigationssysteme integriert werden, was i. d. R. über eine asynchrone Synchronisation am heimischen PC oder, wenn das Navigationssystem dafür die notwendige Technik vorhält, online über Mobilfunk, WLAN usw. und damit hochaktuell erfolgen kann. Damit kann der oben genannten rein geografisch basierten Umkreissuche eine dynamische Komponente in Form der Preishöhe als Selektionskriterium bzw. Informationskriterium hinzugefügt werden. Eine exemplarische Lösung ist bei der Fa. POICON zu finden (www.poicon.com/de/index.php).

Nun ist der Benzinpreis ein hoch dynamischer Wert, der sich innerhalb eines Tages und erst recht über mehrere Tage erheblich verändert, was bei Anwendung des oben beschriebenen Stand der Technik zu Ergebnissen führen kann, die den Erwartungshaltungen des Kunden eindeutig widersprechen. D. h., es sind Nachteile zu beobachten, die aus dem aktuellen Stand der Technik aber auch der Methodik der Datenintegration resultieren. Diese seien im Folgenden aufgeführt.

a) Die realen, aktuell gültigen Daten liegen heute nicht in Echtzeit oder in ausreichender Qualität vor. Mitunter sind die Preisinformationen veraltet oder zu unterschiedlichen Zeiten/Tagen ermittelt und weiterhin als aktuell im Datenpool gespeichert. Dadurch wird ein Vergleich von benachbarten Tankstellen, deren Preisermittlung sich auf unterschiedliche Tage bezieht, eigentlich unmöglich. Eine vermeintlich günstige Tankstelle ist nur deshalb günstig, weil der Preis älter ist.

b) Die Daten, die nach dem Stand der Technik genutzt werden, sind als dynamischer Content abgelegt und müssen regelmäßig (mind. täglich, wenn nicht öfters) aktualisiert werden. D.h., um wirklich die günstigste Tankstelle im Umkreis zu finden, muss eine online Datenverbindung vom Navigationssystem zum Server, der den Content vorhält, möglich sein. Es verfügen aber bei Weitem nicht alle Navigationssysteme über eine entsprechende Luftschnittstelle. Zudem bedeutet eine solche Schnittstelle i. d. R. auch weitere Kosten für den Nutzer.

Es ist denkbar, dass sich der Nachteil a) durch präzisere Datenerfassung und umfangreiche Qualitätsmaßnahmen oder durch technische Erweiterungen beheben lässt, was mittelfristig aber nicht zu erwarten ist, da dies nur mit erheblichem Aufwand erzielt werden kann.

## Gegenstand der Erfindung

Der Erfindung liegt die Aufgabe zugrunde, ein Verfahren und eine Vorrichtung bereitzustellen, mit der eine Datenbank erstellt werden kann, die Informationen über Tankstellen in einem Bezugsgebiet aufweist, die aus Daten der Vergangenheit über die jeweiligen Preise der jeweiligen Kraftstoffart der Tankstellen in dem Bezugsgebiet gewonnen werden. Eine weitere Aufgabe der Erfindung ist, ein Verfahren und eine Vorrichtung bereitzustellen zur automatischen Auswahl mindestens einer Tankstelle für Kraftfahrzeuge unter Verwendung der erfindungsgemäßen Datenbank.

Die vorstehenden Aufgaben werden gelöst mit den Merkmalen der Patentansprüche.

Die vorliegende Erfindung basiert auf dem Grundgedanken, Preisinformationen für einen zurückliegenden Zeitraum für jede an einer jeweiligen Tankstelle angebotene Kraftstoffart auszuwerten und relative zeitunabhängige Preisunterschiede zwischen den Tankstellen zu ermitteln und diese einem Nutzer bereitzustellen.

Im Gegensatz zu dem oben genannten Stand der Technik ist es nicht erforderlich, aktuelle Preisinformationen zu den Kraftstoffarten an den Tankstellen abzufragen oder zu übermitteln. Auf diese Weise können die Nachteile wie sie vorstehend unter Punkt a) aufgeführt sind, vermieden werden.

Gemäß einem weiteren Aspekt der Erfindung können die Informationen über Tankstellen in einem Bezugsgebiet relationell verbunden werden mit den Informationen eines anderen Informationssystems, z.B. einer Internetanwendung oder eines Navigationssystems, wobei die oft in dem Kartenmaterial dieser Informationssysteme vorhandenen Tankstelleninformationen verknüpft werden mit den Informationen über Preisdifferenzen der von Tankstellen angebotenen Kraftstoffart.

Die Erfindung hat dabei den Vorteil, dass die Datenbank im strengen Sinn keine dynamischen Daten enthält, sondern Informationen über die Preisdifferenzen als statische Daten in z.B. ein Navigationssystem eingespielt werden können. Das Einspielen der Informationen kann entweder getrennt oder mit einem gleichzeitigen Aufspielen der Kartendaten in ein Navigationssystem erfolgen. Ein tägliches Update der Informationen möglicherweise im Stundentakt oder bei Bedarf in noch kürzeren Abständen ist gemäß dem Konzept der vorliegenden Erfindung nicht mehr notwendig.

Im Wesentlichen besteht das erfindungsgemäße Verfahren zum Erstellen einer Datenbank, die Informationen über Tankstellen in einem Bezugsgebiet aufweist, aus den folgenden Schritten:

Eingeben von Preisinformationen für einen zurückliegenden beliebigen Zeitraum für jede an der jeweiligen Tankstelle angebotene Kraftstoffart. Dabei kann der zurückliegende Zeitraum vorzugsweise mindestens einen Tag, eine Woche, einen Monat, ein Quartal oder ein Jahr umfassen. Auf der Basis der Preisinformationen für die jeweilige Kraftstoffart von mehreren Tankstellen, vorzugsweise allen Tankstellen in einem Bezugsgebiet, wird erfindungsgemäß ein Referenzwert ermittelt. Dieser Referenzwert wird für jede Kraftstoffart separat berechnet. Mit Bezug auf den jeweiligen Referenzwert für jede an einer Tankstelle angebotene Kraftstoffart wird eine Preisdifferenz berechnet, die höher, gleich oder niedriger als der Referenzwert für die jeweilige Kraftstoffart sein kann. Diese Preisdifferenzen werden für die Tankstellen und für die jeweilige Kraftstoffart in der Datenbank gespeichert.

Die erfindungsgemäße Vorrichtung zum Erstellen einer solchen Datenbank weist Einrichtungen zum Eingeben von Preisinformationen, Berechnen eines Referenzwerts, Berechnen einer Preisdifferenz bezogen auf den jeweiligen Referenzwert und Speicher zum Speichern der Preisdifferenzen für die Tankstellen und die jeweilige Kraftstoffart in der Datenbank auf.

Gemäß einem weiteren Aspekt der Erfindung wird ein Verfahren zur automatischen Auswahl mindestens einer Tankstelle für Kraftfahrzeuge bereitgestellt, das im Wesentlichen die folgenden Schritte umfasst. Zunächst wird die Position eines Kraftfahrzeuges erfasst. Dies kann durch Eingeben einer Adresse wie Land, Stadt und Straße oder von Koordinaten der Position erfolgen, oder vorzugsweise durch automatische Positionsbestimmung mit Hilfe von Satellitennavigationssystemen wie GPS oder auch Handy-Ortung erfolgen. Anhand der so bestimmten Position des Kraftfahrzeuges erfolgt ein Durchsuchen einer Datenbank, die mit dem vorstehend beschriebenen Verfahren zum Erstellen einer Datenbank erstellt worden ist, und zwar das Durchsuchen nach allen Tankstellen in einem bestimmten Umkreis zur aktuellen Position des Kraftfahrzeuges. Der Umkreis kann bestimmt sein wahlweise durch eine vorgegebene Entfernung, vorgegebene Fahrstrecke, vorgegebene Fahrzeit jeweils von der aktuellen Position des Kraftfahrzeuges zu einer Tankstelle.

Vorzugsweise wird zusätzlich die Information über eine geplante Fahrroute des Kraftfahrzeuges berücksichtigt. So kann beispielsweise beim Durchsuchen der Datenbank berücksichtigt werden, dass sich das Kraftfahrzeug auf einer Route von A nach B befindet, wobei zum Beispiel das Kraftfahrzeug gemäß einer vorberechneten Fahrroute auf einer Autobahn unterwegs sein kann. Dann werden solche Tankstellen mit angezeigt, die auf dem Weg oder benachbart zur Fahrroute liegen.

Unter Berücksichtigung der für eine Kraftstoffart, die das entsprechende Kraftfahrzeug benötigt, werden mit diesem Verfahren die Tankstellen sortiert, und zwar vorzugsweise auf der Basis der gespeicherten Preisdifferenzen und unter Berücksichtigung der jeweiligen Fahrstrecke zu der Tankstelle. In einem weiteren Schritt wird eine Liste der gefundenen Tankstelle in der Reihenfolge der durchgeführten Sortierung angezeigt. Dabei kann alternativ die Anzeige erfolgen durch entsprechende Markierung der Tankstellen auf dem Display einer von einem Navigationssystem gezeigten Landkarte. Die günstigste Tankstelle kann dabei entweder in der Liste als erstes aufgeführt werden, oder auf einer Karte durch besondere Hervorhebung kenntlich gemacht werden, zum Beispiel durch die Anzeige mit einer entsprechenden Signalfarbe für den markierten Ort der Tankstelle. Bevorzugt wird die günstigste Tankstelle mit einem großen Punkt hervorgehoben im Vergleich zu mittelgroßen und kleinen Punkten, die Tankstellen mit mittleren und höheren Preisdifferenzen gegenüber dem Referenzwert kennzeichnen. Vorzugsweise wird die Tankstelle mit dem günstigsten Kraftstoffpreis durch eine hohe Blinkfrequenz der markierten Tankstelle gekennzeichnet. Besonders bevorzugt wird automatisch die Fahrroute zu dieser günstigsten Tankstelle neu berechnet und angezeigt. Alternativ erfolgt die Neu-Berechnung und Anzeige der Fahrroute nach manueller Auswahl einer Tankstelle durch einen Benutzer.

In der vorliegenden Anmeldung wird von Kraftstoffpreisen gesprochen, wobei dabei Kraftstoffe wie Benzin, Diesel oder andere Kraftstoffarten zum Beispiel auch Gas und deren Preise mit umfasst sein sollen. Das angesprochene Bezugsgebiet, für welches die Datenbank erstellt wird, ist zunächst unbestimmt und möglichst groß zu wählen. Zum Beispiel kann das Bezugsgebiet ganz Europa umfassen oder einzelne europäische Staaten, Bundesländer, Kreise und auch Städte.

Die Erfindung hat insbesondere den Vorteil, dass sie nicht abhängig ist von der laufenden Eingabe von aktuellen Kraftstoffpreisen, wobei der Kraftstoffpreis eine dynamische Größe darstellt, die sowohl von der Zeit als auch dem Ort abhängig ist. Die Erfindung arbeitet unabhängig davon, ob sich der Preis nun täglich ändert oder möglicherweise auch während eines Tages. Die Erfindung arbeitet auch unabhängig davon, an welchem Ort sich ein Benutzer befindet. Mithilfe der Erfindung wird berücksichtigt, dass zum Beispiel Tankstellen in einer Stadt A preiswerter sein können als in einer Stadt B. Ebenso wird mit der Erfindung berücksichtigt, dass in der Regel Tankstellen auf der Autobahn teurer sind als Tankstellen in der Nähe einer Autobahnausfahrt auf einer daneben liegenden Landstraße.

Das erfinderische Konzept ist darstellbar als eine sogenannte relative Preishöhenkarte. In dieser Preishöhenkarte werden für alle Tankstellen Preisdifferenzen bezogen auf einen Referenzwert, vorzugsweise einen Mittelwert, festgehalten. Diese Preishöhenkarte gibt dabei die Preisdifferenzen entweder absolut in der jeweiligen Landeswährung oder als einen relativen Wert an. Zum leichteren Verständnis kann die Preishöhenkarte mit einer geografischen Karte verglichen werden, in der Höhenangaben enthalten sind, die sich auf Normalnull (NN) beziehen.

Die Erfindung wird nachstehend anhand von Beispielen näher erläutert:

## Detaillierte Beschreibung der Erfindung

Beispielhaft wird zunächst eine globale Mittelbildung beschrieben, die für die Berechnung eines Referenzwerts für jede an der jeweiligen Tankstelle angebotene Kraftstoffart verwendet wird.

Die Bestimmung der Preishöhenkarte erfolgt anhand der Beobachtung, Analyse und Auswertung historischer Preisdaten für alle Tankstellen und für alle angebotenen Kraftstoffarten.

Für die weiteren Betrachtungen wird folgendes festgelegt:

$P_{TxKy}(t_i)$ = Preis des Kraftstoffes $K_y$ an Tankstelle $T_x$ zum Zeitpunkt $t_i$,
$T_x$ = Tankstelle x, mit x = 1 .. n
$K_y$ = Kraftstoffart y, mit y = 1 .. m.

Für jede Tankstelle und jede Kraftstoffart liegen also Preisinformationen in Form von Zeitreihen $P_{TxKy}$ vor. Man erhält so nun bis zu m x n Zeitreihen für den Preisverlauf $P_{TxKy}(t_i)$. Mittelt man nun die Preise aller Tankstellen für die jeweilige Kraftstoffart zu ein und demselben Zeitpunkt $t_i$, so erhält man einen Mittelwert für den Kraftstoffpreis für den Zeitpunkt $t_i$ vorzugsweise nach folgender Formel:

$$\overline{P}_{Ky}(t_i) = \frac{1}{n}\sum_{x=1}^{n} P_{TxKy}(t_i). \qquad (1)$$

Bildet man nun für jede Zeitreihe die Differenz zwischen dem Preis zum Zeitpunkt $t_i$ und dem zugehörigen Mittelwert zum Zeitpunkt $t_i$, erhält man eine Zeitreihe der Preisdifferenzen $\Delta_{TxKy}(t_i)$ für jede Tankstelle und Kraftstoffsorte:

$$\Delta_{TxKy}(t_i) = P_{TxKy}(t_i) - \overline{P}_{Ky}(t_i). \qquad (2)$$

Mittelt man nun die Zeitreihe der Preisdifferenzen $\Delta_{TxKy}(t_i)$ einer Tankstelle, so erhält man den gewünschten Wert $\Delta_{TXKy}$ als relative, gemittelte Preisdifferenz je Tankstelle und Kraftstoffart vorzugsweise nach folgender Formel:

$$\overline{\Delta}_{TxKy} = \frac{1}{r}\sum_{i=1}^{r} \Delta_{TxKy}(t_i). \qquad (3)$$

Nun ist zu erwarten, dass die Zeitreihe der Preisdifferenzen $\Delta_{TxKy}(t_i)$ keine Konstante ist, sondern gewissen Schwankungen unterworfen ist. Diese Schwankungen bzw. Unsicherheiten können durch die Standardabweichungen des Mittelwertes $\sigma_{\Delta TxKy}$ ausgedrückt werden. Je geringer die Standardabweichung ist, desto größer ist die Zuverlässigkeit der ermittelten Preisdifferenz.

Zwei Tankstellen haben beispielsweise die gleiche Preisdifferenz $\Delta_{TxKy}$, die Standardabweichungen unter-

scheiden sich aber erheblich. So liegt die für Tankstelle A deutlich unter 1 Cent, während die der Tankstelle B deutlich über 1 Cent liegt. Somit ist die Wahrscheinlichkeit, dass Tankstelle A die günstigere Tankstelle ist, deutlich höher und im direkten Vergleich der beiden Tankstellen ist diese zu bevorzugen.

Eine weitere Möglichkeit besteht in der Umkreis- bzw. nachbarschaftsbezogenen Mittelbildung zur Berechnung eines Referenzwertes für die jeweilige Kraftstoffart von Tankstellen.

Diese Alternative berücksichtigt, dass sich die Kraftstoffpreise in einer großräumigen Betrachtung nicht linear verhalten und die Preise sich in verschiedenen Regionen unterschiedlich entwickeln, was bei der o.g. globalen Mittelwertbildung zu Unschärfen führen kann. Insbesondere wird dies deutlich, wenn man die Preisentwicklung in verschiedenen Ländern betrachtet, die mitunter durch die Steuergesetzgebung beeinflusst werden.

Abhilfe wird dadurch geschaffen, dass das Gesamtgebiet in Regionen unterteilt wird, für die die im ersten Verfahren genannten Werte regional bestimmt werden. Alternativ kann auch eine nachbarschaftsbezogene Mittelwertbildung herangezogen werden. Dabei wird für jede Tankstelle ein Umkreis betrachtet. Alle in diesem Umkreis liegenden Tankstellen werden nun nach der o.g. Methodik betrachtet und ein lokaler, nachbarschaftsbezogener, relativer Wert berechnet.

Die mit dem erfindungsgemäßen Verfahren erstellte Datenbank kann relationell verknüpft werden mit einer weiteren Datenbank bzw. mit einem weiteren Informationssystem wie eine Internetanwendung und/oder ein Navigationssystem. Dabei kann das Navigationssystem fest in einem Kraftfahrzeug eingebaut sein oder mit einem Mobiltelefon nutzbar sein.

Die gemäß den o.g. Verfahren erstellten Preisinformationen (relative, gemittelte Preisdifferenz) inklusive der genannten Zusatzinformationen (z.B. Standardabweichung der gemittelten Preisdifferenz) werden dabei als statische Daten zur Nutzung in Navigationssystemen oder anderen Location Based Services (z.B. im Web) herangezogen. Dazu werden diese neuen Zusatzinformationen z.B. als weiteres Attribut für die jeweilige Tankstelle z.B. den Kartendaten der Kartenhersteller hinzugefügt. Die Daten könnten aber auch auf anderem Wege Eingang in die Systeme finden, z.B. über Verbreitung über Luftschnittstellen (Mobilfunk, Broadcast usw.). Bei der Selektion der günstigsten Tankstelle im Umkreis des aktuellen Aufenthaltsortes des Fahrzeugs kann nun neben der Entfernung auch der Wert Preisdifferenz oder ein Wahrscheinlichkeitswert berechnet aus der Preisdifferenz und der Standardabweichung angezeigt oder zur Sortierung der Liste im Navigationssystem oder der entsprechenden Anwendung herangezogen werden.

Des Weiteren wird in Ergänzung vorgeschlagen, anstelle der Selektion der günstigsten Tankstelle im Umkreis, die Selektion mit einer Kostenfunktion zu verschneiden. Die Selektion erfolgt also nicht nur anhand von Preis (unterschied) und (zu fahrender) Entfernung, sondern es wird eine sortierte Liste für die Tankstellen in der Umgebung erstellt, die die ökonomischste Selektion darstellt. In die Priorisierung wird neben der Preisdifferenz und zu fahrender Strecken auch der Benzinverbrauch für die Streckendifferenz z.B. zweier Tankstellen und die mögliche Ersparnis in Abhängigkeit vom (aktuellen) Tankinhalt mit einbezogen.

Tankstelle A ist beispielsweise 0,01 € billiger als Tankstelle B. Das Fahrzeug verbraucht (aktuell) 8 Liter/100 km. Bei einem zu erwartenden Tankvolumen von 60 Litern wäre die Ersparnis 0,60 €. Mit 0,60 € wiederum kann der Fahrer 5 km fahren. D.h., ist die Tankstelle A 2,5 km oder mehr entfernt als B, so ist die Wahl unökonomisch und Tankstelle B würde bevorzugt. Im Weiteren kann dieser Kostenfunktion auch ein Zeitaufwandsfaktor hinzugefügt werden, so dass die Tankstelle B, obgleich teurer, auch dann priorisiert wird, wenn Tankstelle A nach der o.g. Rechnung ökonomischer wäre.

Die Erfindung wurde anhand von Beispielen näher erläutert, die aber geändert und modifiziert werden können, ohne vom Schutzbereich der Ansprüche abzuweichen. Insbesondere können die oben genannten Beispiele bzw. einzelnen Merkmale der Beispiele für sich allein verwendet werden oder miteinander kombiniert bzw. ausgetauscht werden.

**Patentansprüche**

1. Verfahren zum Erstellen einer Datenbank, die Informationen über Tankstellen in einem Bezugsgebiet aufweist, mit den Schritten:

   Eingeben von Preisinformationen für einen zurückliegenden Zeitraum für jede an der jeweiligen Tankstelle angebotene Kraftstoffart,
   berechnen eines Referenzwerts für jede Kraftstoffart auf der Basis der Preisinformationen für die jeweilige Kraftstoffart von mehreren Tankstellen,
   berechnen einer Preisdifferenz bezogen auf den jeweiligen Referenzwert für jede an der jeweiligen Tankstelle angebotene Kraftstoffart, und
   speichern der Preisdifferenzen für die Tankstellen und die jeweilige Kraftstoffart in der Datenbank.

2. Verfahren nach Anspruch 1, mit folgenden Schritten:

Eingeben von Preisinformationen für einen zurückliegenden Zeitraum, für jede Tankstelle und jede an der Tankstelle angebotene Kraftstoffart in Form von Zeitreihen $P_{TxKy}$,

berechnen eines Mittelwerts der Preise von mehreren Tankstellen (Tx) für die jeweilige Kraftstoffart (Ky) zu einem Zeitpunkt ($t_i$) als den jeweiligen Referenzwert vorzugsweise nach folgender Formel:

$$\overline{P}_{Ky}(t_i) = \frac{1}{n}\sum_{x=1}^{n} P_{TxKy}(t_i),$$

berechnen der Differenz zwischen dem Preis zum Zeitpunkt ($t_i$) und dem zugehörigen Mittelwert zum Zeitpunkt ($t_i$) für jede Tankstelle und jede Kraftstoffart zu allen Zeitpunkten ($t_i$) in Form von Zeitreihen der Preisdifferenzen $\Delta_{TxKy}(t_i)$ nach der folgenden Formel:

$$\Delta_{TxKy}(t_i) = P_{TxKy}(t_i) - \overline{P}_{Ky}(t_i),$$

berechnen eines Mittelwertes für die Zeitreihe der Preisdifferenzen einer Tankstelle, um eine relative, gemittelte Preisdifferenz je Tankstelle und Kraftstoffart vorzugsweise nach folgender Formel zu erhalten:

$$\overline{\Delta}_{TxKy} = \frac{1}{r}\sum_{i=1}^{r} \Delta_{TxKy}(t_i),$$

und speichern der berechneten relativen, gemittelten Preisdifferenz je Tankstelle und Kraftstoffart in der Datenbank.

3.  Verfahren nach Anspruch 2, mit dem weiteren Schritt:

    Berechnen einer Standardabweichung aus den Zeitreihen der Preisdifferenzen $\Delta_{TxKy}(t_i)$ für jede relative, gemittelte Preisdifferenz jeder Tankstelle und Kraftstoffart, und
    speichern dieser Standardabweichung, jeweils zugeordnet zu der relativen, gemittelten Preisdifferenz je Tankstelle und Kraftstoffart.

4.  Verfahren nach Anspruch 2 oder 3, wobei als Referenzwert der Mittelwert der Preise für die jeweilige Kraftstoffart aller Tankstellen in einem Umkreis um eine bestimmte Tankstelle verwendet wird.

5.  Verfahren nach Anspruch 2 oder 3, wobei als Referenzwert der Mittelwert der Preise für die jeweilige Kraftstoffart aller Tankstellen in einer vorgegebenen Region verwendet wird, z.B. in einer bestimmten Stadt, einem bestimmten Kreis, einem bestimmten Bundesland oder einem bestimmten Staat.

6.  Verfahren nach einem der Ansprüche 1 bis 5, mit dem weiteren Schritt:

    relationelles Verbinden der Tankstelleninformation in der Datenbank mit einem weiteren Informationssystem wie eine Internetanwendung und/oder ein Navigationssystem.

7.  Verfahren zur automatischen Auswahl mindestens einer Tankstelle für Kraftfahrzeuge mit den folgenden Schritten:

    a) Bestimmen einer Position eines Kraftfahrzeuges,
    b) durchsuchen einer Datenbank, die Informationen über Tankstellen in einem Bezugsgebiet aufweist, nach allen Tankstellen in einem Umkreis zur aktuellen Position des Kraftfahrzeuges,
    c) sortieren der Tankstellen unter Berücksichtigung der für eine Kraftstoffart und für eine Tankstelle gespeicherten Preisdifferenz unter Berücksichtigung einer jeweiligen Fahrstrecke zu der Tankstelle, und
    d) anzeigen der Liste der gefundenen Tankstellen in der Reihenfolge der durchgeführten Sortierung.

8. Verfahren nach Anspruch 7, wobei der Schritt des Sortierens der Tankstellen neben der Preisdifferenz für die gewünschte Kraftstoffart für jede Tankstelle unter Berücksichtigung des für die Entfernung erforderlichen Kraftstoffverbrauchs erfolgt.

9. Verfahren nach Anspruch 7 oder 8, wobei für den Schritt des Sortierens der Tankstellen weiterhin ein Zeitaufwandsfaktor berücksichtigt wird.

10. Verfahren nach einem der Ansprüche 7 bis 9, wobei neben der Preisdifferenz für die gewünschte Kraftstoffart an jeder Tankstelle zusätzlich die gespeicherte Standardabweichung ausgewertet wird.

11. Vorrichtung zum Erstellen einer Datenbank, die Informationen über Tankstellen in einem Bezugsgebiet aufweist, mit:

einer Einrichtung zum Eingeben von Preisinformationen für einen zurückliegenden Zeitraum für jede an der jeweiligen Tankstelle angebotene Kraftstoffart,
einer Einrichtung zum Berechnen eines Referenzwerts für jede Kraftstoffart auf der Basis der Preisinformationen für die jeweilige Kraftstoffart von mehreren Tankstellen,
einer Einrichtung zum Berechnen einer Preisdifferenz bezogen auf den jeweiligen Referenzwert für jede an der jeweiligen Tankstelle angebotene Kraftstoffart, und
einem Speicher zum Speichern der Preisdifferenzen für die Tankstellen und die jeweilige Kraftstoffart in der Datenbank.

12. Vorrichtung nach Anspruch 11, mit:

einer Einrichtung zum Eingeben von Preisinformationen für einen zurückliegenden Zeitraum, für jede Tankstelle und jede an der Tankstelle angebotene Kraftstoffart in Form von Zeitreihen $P_{TxKy}$,
einer Einrichtung zum Berechnen eines Mittelwerts der Preise von mehreren Tankstellen (Tx) für die jeweilige Kraftstoffart (Ky) zu einem Zeitpunkt ($t_i$) als den jeweiligen Referenzwert vorzugsweise nach folgender Formel:

$$\overline{P}_{Ky}(t_i) = \frac{1}{n}\sum_{x=1}^{n} P_{TxKy}(t_i),$$

einer Einrichtung zum Berechnen der Differenz zwischen dem Preis zum Zeitpunkt ($t_i$) und dem zugehörigen Mittelwert zum Zeitpunkt ($t_i$) für jede Tankstelle und jede Kraftstoffart zu allen Zeitpunkten ($t_i$) in Form von Zeitreihen der Preisdifferenzen $\Delta_{TxKy}(t_i)$ nach der folgenden Formel:

$$\Delta_{TxKy}(t_i) = P_{TxKy}(t_i) - \overline{P}_{Ky}(t_i),$$

einer Einrichtung zum Berechnen eines Mittelwertes für die Zeitreihe der Preisdifferenzen einer Tankstelle, um eine relative, gemittelte Preisdifferenz je Tankstelle und Kraftstoffart vorzugsweise nach folgender Formel zu erhalten:

$$\overline{\Delta}_{TxKy} = \frac{1}{r}\sum_{i=1}^{r} \Delta_{TxKy}(t_i),$$

und
dem Speicher zum Speichern der berechneten relativen, gemittelten Preisdifferenz je Tankstelle und Kraftstoffart in der Datenbank.

13. Vorrichtung nach Anspruch 12, mit:

einer Einrichtung zum Berechnen einer Standardabweichung aus den Zeitreihen der Preisdifferenzen $\Delta_{TxKy}(t_i)$ für jede relative, gemittelte Preisdifferenz jeder Tankstelle und Kraftstoffart, und

wobei in dem Speicher diese Standardabweichung gespeichert wird, jeweils zugeordnet zu der relativen, gemittelten Preisdifferenz je Tankstelle und
Kraftstoffart.

**14.** Vorrichtung nach Anspruch 12 oder 13, wobei als Referenzwert der Mittelwert der Preise für die jeweilige Kraftstoffart aller Tankstellen in einem Umkreis um eine bestimmte Tankstelle verwendet wird.

**15.** Vorrichtung nach Anspruch 12 oder 13, wobei als Referenzwert der Mittelwert der Preise für die jeweilige Kraftstoffart aller Tankstellen in einer vorgegebenen Region verwendet wird, z.B. in einer bestimmten Stadt, einem bestimmten Kreis, einem bestimmten Bundesland oder einem bestimmten Staat.

**16.** Vorrichtung nach einem der Ansprüche 11 bis 15, mit:

einer Einrichtung zum relationellen Verbinden der Tankstelleninformation in der Datenbank mit einem weiteren Informationssystem wie eine Internetanwendung und/oder ein Navigationssystem.

**17.** Vorrichtung zur automatischen Auswahl mindestens einer Tankstelle für Kraftfahrzeuge mit:

a) einer Einrichtung zum Bestimmen einer Position eines Kraftfahrzeuges,
b) einer Einrichtung zum Durchsuchen einer Datenbank, die Informationen über Tankstellen in einem Bezugsgebiet aufweist, nach allen Tankstellen in einem Umkreis zur aktuellen Position des Kraftfahrzeuges,
c) einer Einrichtung zum Sortieren der Tankstellen unter Berücksichtigung der für eine Kraftstoffart und für eine Tankstelle gespeicherten Preisdifferenz zu der Tankstelle, und
d) einer Einrichtung zum Anzeigen der Liste der gefundenen Tankstellen in der Reihenfolge der durchgeführten Sortierung.

**18.** Vorrichtung nach Anspruch 17, wobei der Schritt des Sortierens der Tankstellen neben der Preisdifferenz für die gewünschte Kraftstoffart für jede Tankstelle unter Berücksichtigung einer jeweiligen Fahrstrecke zu der Tankstelle und/oder eines für die Fahrstrecke erforderlichen Kraftstoffverbrauchs erfolgt.

**19.** Vorrichtung nach Anspruch 17 oder 18, wobei der Schritt des Sortierens der Tankstellen unter Berücksichtigung eines Zeitaufwandsfaktors erfolgt.

**20.** Vorrichtung nach einem der Ansprüche 17 bis 19, wobei neben der Preisdifferenz für die gewünschte Kraftstoffart an jeder Tankstelle zusätzlich die gespeicherte Standardabweichung ausgewertet wird.

**Europäisches Patentamt**
**European Patent Office**
**Office européen des brevets**

# EUROPÄISCHER RECHERCHENBERICHT

**Nummer der Anmeldung**

EP 09 00 6647

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2008/083737 A (TOMTOM INT BV; GEELEN PIETER [NL]) 17. Juli 2008 (2008-07-17) * Zusammenfassung; Abbildungen 1,3,4A,5A,5B,6,7,11 * * Seiten 1,2,4 * * Seiten 9,11 * * Seite 13 - Seite 19 * * Seiten 20,22 * ----- | 1-20 | INV. G06Q30/00 |
| X | WO 2008/074519 A (IBM [US]; IBM FRANCE [FR]; PICHETTI LUIGI [IT]; VELATI MARCELLO [IT];) 26. Juni 2008 (2008-06-26) * Zusammenfassung; Abbildungen 1,2a,2b,5 * * Seite 5, Zeile 24 - Seite 6, Zeile 16 * * Seite 7, Zeile 35 - Seite 8, Zeile 34 * * Seite 10, Zeile 5 - Zeile 31 * * Seite 11, Zeile 6 - Zeile 28 * ----- | 1-20 | |

**RECHERCHIERTE SACHGEBIETE (IPC)**

G06Q

Der vorliegende Recherchenbericht wurde für alle Patentansprüche erstellt

| Recherchenort | Abschlußdatum der Recherche | Prüfer |
|---|---|---|
| Den Haag | 11. August 2009 | Fiorenzo Catalano, M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**   EP 09 00 6647

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-08-2009

| Im Recherchenbericht angeführtes Patentdokument | Datum der Veröffentlichung | Mitglied(er) der Patentfamilie | Datum der Veröffentlichung |
|---|---|---|---|
| WO 2008083737 A | 17-07-2008 | AR 063913 A1 | 25-02-2009 |
| | | AR 063914 A1 | 25-02-2009 |
| | | AR 063915 A1 | 25-02-2009 |
| | | AR 063916 A1 | 25-02-2009 |
| | | AR 063917 A1 | 25-02-2009 |
| | | AR 063918 A1 | 25-02-2009 |
| | | AR 063919 A1 | 25-02-2009 |
| | | AR 063920 A1 | 25-02-2009 |
| | | AR 063934 A1 | 25-02-2009 |
| | | AR 063935 A1 | 25-02-2009 |
| | | AR 063965 A1 | 04-03-2009 |
| | | AR 063966 A1 | 04-03-2009 |
| | | AR 063967 A1 | 04-03-2009 |
| | | AR 063991 A1 | 04-03-2009 |
| | | AR 063992 A1 | 04-03-2009 |
| | | AR 063993 A1 | 04-03-2009 |
| | | AR 063994 A1 | 04-03-2009 |
| | | AR 063995 A1 | 04-03-2009 |
| | | AR 063996 A1 | 04-03-2009 |
| | | AR 063997 A1 | 04-03-2009 |
| | | AR 063998 A1 | 04-03-2009 |
| | | AR 064022 A1 | 04-03-2009 |
| | | AR 064023 A1 | 04-03-2009 |
| | | AR 064024 A1 | 04-03-2009 |
| | | AR 064025 A1 | 04-03-2009 |
| | | AR 064067 A1 | 11-03-2009 |
| | | AR 064068 A1 | 11-03-2009 |
| | | AR 064069 A1 | 11-03-2009 |
| | | AR 064071 A1 | 11-03-2009 |
| | | AU 2007343388 A1 | 17-07-2008 |
| | | AU 2007343390 A1 | 17-07-2008 |
| | | AU 2007343392 A1 | 17-07-2008 |
| | | AU 2007343393 A1 | 17-07-2008 |
| | | AU 2007343394 A1 | 17-07-2008 |
| | | AU 2007343396 A1 | 17-07-2008 |
| | | AU 2007343401 A1 | 17-07-2008 |
| | | AU 2007343402 A1 | 17-07-2008 |
| | | AU 2007343403 A1 | 17-07-2008 |
| | | AU 2007343406 A1 | 17-07-2008 |
| | | AU 2007343408 A1 | 17-07-2008 |
| | | AU 2007343409 A1 | 17-07-2008 |
| | | AU 2007343410 A1 | 17-07-2008 |
| | | AU 2007343413 A1 | 17-07-2008 |
| | | AU 2007343420 A1 | 17-07-2008 |
| | | WO 2008083735 A1 | 17-07-2008 |
| | | WO 2008083736 A1 | 17-07-2008 |

Für nähere Einzelheiten zu diesem Anhang : siehe Amtsblatt des Europäischen Patentamts, Nr.12/82

**ANHANG ZUM EUROPÄISCHEN RECHERCHENBERICHT**
**ÜBER DIE EUROPÄISCHE PATENTANMELDUNG NR.**

EP 09 00 6647

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-08-2009

| Im Recherchenbericht angeführtes Patentdokument | Datum der Veröffentlichung | Mitglied(er) der Patentfamilie | Datum der Veröffentlichung |
|---|---|---|---|
| WO 2008083737 A | | WO 2008083738 A1<br>WO 2008083739 A1<br>WO 2008083740 A1 | 17-07-2008<br>17-07-2008<br>17-07-2008 |
| WO 2008074519 A | 26-06-2008 | KEINE | |

Für nähere Einzelheiten zu diesem Anhang : siehe Amtsblatt des Europäischen Patentamts, Nr.12/82

EPO FORM P0461